# FASCICULE DE BREVET EUROPEEN

(11) **EP 2 865 223 B1**
(45) Date de publication et mention de la délivrance du brevet: **21.04.2021**
(21) Numéro de dépôt: 13731395.3
(22) Date de dépôt: 07.06.2013
(51) Int. Cl.: H04W 52/02, H04W 12/06, H04W 88/08

(54) **PROCEDE DE REVEIL A DISTANCE D'UN EQUIPEMENT ROUTEUR SANS FIL**
VERFAHREN ZUR DEZENTRALEN AKTIVIERUNG EINER WIRELESS-ROUTER-VORRICHTUNG
METHOD FOR REMOTELY AWAKENING A WIRELESS ROUTER DEVICE

(30) Priorité: 21.06.2012 FR 1255828
(43) Date de publication de la demande: 29.04.2015
(73) Titulaire: ORANGE, 75015 Paris (FR)
(72) Inventeur: FONTAINE, Fabrice, 35850 Geveze (FR); BARANSKI, Fabrice, 35135 Chantepie (FR); GLOANEC, Simon, 35000 Rennes (FR)
(86) Numéro de dépôt international: PCT/FR2013/051322
(87) Numéro de publication internationale: WO 2013/190211

(56) Documents cités:
- EP-A1- 2 273 828
- EP-A1- 2 346 289
- WO-A1-2004/075583
- WO-A1-2011/134910
- WO-A1-2011/137345
- US-A1- 2010 008 276
- US-A1- 2011 237 257
- US-A1- 2012 026 925

## Description

### Domaine technique

L'invention se rapporte au domaine des télécommunications et plus particulièrement aux communications radioélectriques de type WIFI. L'appellation Wifi (pour « Wireless Fidelity ») rassemble des technologies de transmission sans fil permettant de créer des réseaux informatiques sans fil basés sur les normes de la famille IEEE 802.11.

De manière générale, l'invention s'applique à tout équipement doté d'une fonction de communication sans fil de type WIFI, et plus particulièrement à un équipement routeur d'un réseau domestique équipé d'une telle fonction Wifi. Par fonction Wifi, on entend dans ce cas l'ensemble des éléments matériels et logiciels qui permettent à l'équipement d'assurer l'ensemble des échanges de données, sans fil, sur une liaison radio, dans le réseau WIFI.

Un réseau domestique est un réseau informatique qui relie ensemble, avec ou sans fils, les terminaux (ordinateurs, périphériques d'impression, de stockage...) d'une maison aptes à communiquer ensemble. Un réseau domestique comporte généralement un équipement routeur, aussi communément appelé passerelle, élément intermédiaire assurant la redirection, ou routage, des paquets de données entre les différents terminaux et réseaux qui lui sont connectés.

### Etat de la technique

Un équipement doté d'une fonction Wifi consomme de l'énergie. Notamment, la communication Wifi entre deux appareils sans fil suppose un échange permanent d'informations sur le canal radio. Il est donc usuel d'éteindre électriquement un tel équipement lorsqu'il n'est pas nécessaire de l'utiliser. Cependant, si l'équipement est éteint, sa fonction WIFI est inutilisable. S'il s'agit de surcroît d'un équipement routeur, aucun autre terminal du réseau ne peut de ce fait communiquer sans fil avec les autres équipements du réseau sans fil ou avec l'extérieur du réseau domestique.

Pour réveiller la fonction Wifi d'un tel équipement routeur, plusieurs solutions sont envisageables : rallumer électriquement l'appareil ou rallumer la fonction Wifi (il existe souvent un interrupteur dédié pour l'activation de la fonction Wifi), ce qui suppose une présence physique près de l'équipement. Il est également possible de programmer des plages horaires d'utilisation pendant lesquelles le routeur et/ou sa fonction Wifi seront désactivées, mais dans ce cas toutes les communications sont désactivées. Il est encore possible d'utiliser un autre réseau sans fil (par exemple un réseau mobile) ou un réseau filaire (par exemple un câble Ethernet) pour accéder au routeur et lui ordonner de se réveiller lorsqu'il est en veille, mais ceci suppose d'avoir accès à un tel réseau.

Il existe aussi des solutions de réveil d'un point d'accès par la transmission d'un signal d'alerte. Par exemple, la demande internationale de référence WO 2004/075583 enseigne un procédé et un système de réduction de pollution électromagnétique dans des réseaux locaux sans fil, dans lequel une station de base peut basculer d'un mode sommeil à un mode de réveil sur réception d'un signal d'alerte provenant d'un terminal du réseau local. Ce document décrit une station de base du réseau local sans fil qui bascule d'un mode sommeil au mode d'émission-réception normal uniquement lorsqu'un signal d'alerte reçu correspond à un signal de reconnaissance enregistré du réseau local, comprenant par exemple des données d'informations supplémentaires, tels qu'un code d'identification non ambigu de l'utilisateur, par exemple, un IMSI (International Mobile Subscriber Identification) et / ou un MSISDN (Mobile Subscriber ISDN) qui est stocké sur une carte SIM (Subscriber Identification Module). Cependant la gestion du mode de réveil du point d'accès reste sous-optimale.

Le document WO 2011/137345 A1 enseigne une méthode pour réduire la consommation d'un point d'accès (home node B) domestique. Les points d'accès peuvent être configurés pour rester en mode veille jusqu'à ce qu'ils deviennent nécessaires, sur la base de divers critères. Ils transmettent périodiquement des messages pour détecter les appareils mobiles susceptibles d'avoir besoin des services du nœud domestique.

Le document US 2011/0237257 décrit une architecture selon laquelle deux cellules radio utilisant des technologies radios différentes d'accès (RAT), telles qu'une cellule 3G ou une cellule 4G, peuvent fournir une couverture qui se chevauche. Une première cellule utilisant un premier type d'accès, peut être mise dans un état hors tension, de sorte que moins d'énergie est consommée.

Le document EP 2 346 289 A1 enseigne également une méthode pour réduire la consommation d'un point d'accès. En particulier il propose un mode dans lequel le transfert de données entre le réseau et l'équipement de l'utilisateur est limité, notamment, en puissance de réception.

L'invention offre une solution ne présentant pas les inconvénients de l'état de la technique.

### L'invention

A cet effet, selon un aspect fonctionnel, l'invention a pour objet un procédé et un dispositif de contrôle d'une passerelle de réseau local pourvue d'une fonction de pilotage d'une liaison radio bidirectionnelle en réception et en émission.

Un mode de réalisation est détaillé à l'appui de la revendication indépendante 1 et de sa dépendante. D'autres modes de réalisation sont fournis à titre d'exemple.

Ainsi, l'invention offre l'avantage de désactiver la liaison radio en émission tout en restant à l'écoute d'un identifiant de réveil en réception. Il est donc possible de réveiller l'équipement routeur par le biais du réseau Wifi lui-même tout en maintenant une consommation électrique faible de l'équipement. Le mode de veille active, caractérisé par l'inhibition de la liaison radio en émission, proposé par l'invention, génère en effet une faible consommation d'énergie puisque la radio est activée seulement en réception, pour écouter l'identifiant de réveil, l'émission des données étant inhibée.

De surcroît l'invention permet encore d'économiser de l'énergie par l'introduction d'un mode de réveil passif. En effet l'équipement de l'invention, réveillé de manière transitoire, referme sa liaison Wifi pour repasser en mode de veille active s'il ne reçoit pas, dans un certain laps de temps, une requête spécifique de connexion de la part d'un terminal Wifi. S'il reçoit en revanche une demande de communication d'un terminal autorisé, il peut sortir effectivement de ce mode pour réveiller la fonction Wifi.

Avantageusement durant la veille active, on diminue encore la consommation d'énergie puisque le canal radio est inhibé également en réception pendant une partie du temps qui peut être par exemple la moitié d'un cycle défini en secondes, ou la puissance en réception de l'antenne est diminuée, afin de consommer moins d'énergie, ce qui est intéressant notamment si le terminal de réveil peut se rapprocher de l'équipement, ou encore si la position relative de l'équipement et du terminal est fixe, ou une fréquence d'écoute est sélectionnée, ce qui permet de choisir le canal radio de réception de l'identifiant de réveil, afin de consommer moins d'énergie, puisque dans un tel cas l'équipement peut se contenter d'écouter sur ce canal au lieu de scruter tous les canaux, ou plages de fréquence, possibles.

L'invention concerne également un dispositif de contrôle d'une passerelle, tel que défini dans la revendication 3, une passerelle comportant ledit dispositif, comme défini par la revendication 4 ainsi qu'un programme d'ordinateur comme défini par la revendication 5. L'invention sera mieux comprise à la lecture de la description qui suit, donnée à titre d'exemple et faite en référence aux dessins annexés.

### Les figures:

La figure 1 illustre un réseau sans fil selon l'invention.
La figure 2 représente un bloc diagramme d'un équipement routeur équipé d'une fonction Wifi selon l'invention.
La figure 3 représente les échanges entre un équipement routeur selon l'invention et deux terminaux selon l'invention.
La figure 4 représente un autre mode de réalisation de l'invention.

### Description détaillée d'un exemple de réalisation illustrant l'invention

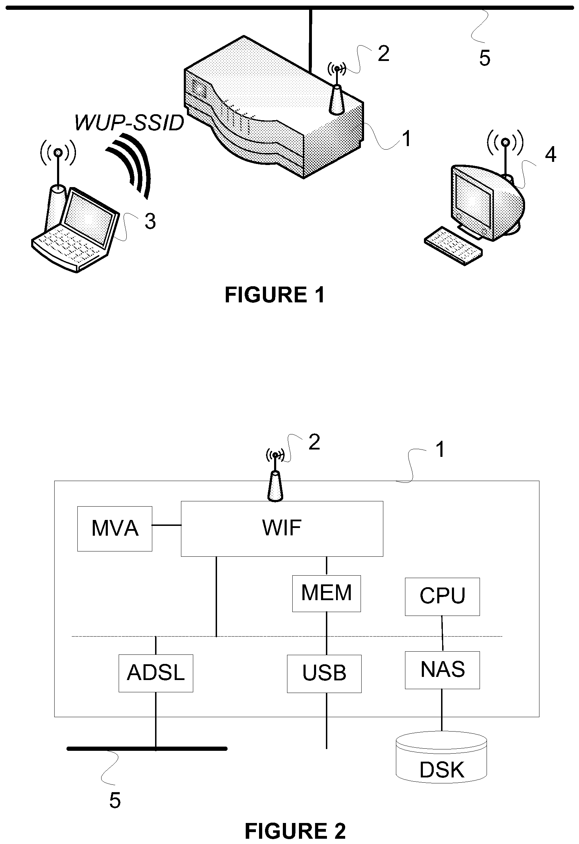

La figure 1 illustre un exemple de réseau sans fil selon l'invention. Un terminal 3 et un terminal 4 sont aptes à établir des connexions avec un équipement routeur 1, ou passerelle domestique, reliée au réseau internet 5 par une liaison haut débit. Le réseau domestique est par exemple un réseau local IP (« Internet Protocol ») et la liaison haut débit de type ADSL (de l'anglais *Asymmetric Digital Subscriber Line).*

L'équipement routeur 1 est par exemple une passerelle domestique connue sous la désignation commerciale de « Livebox ». Il comporte une fonction de communication Wifi, ou point d'accès (en anglais : *Access Point*), qui lui permet de communiquer avec les terminaux du réseau sans fil. Dans la suite, on appelle indifféremment *point d'accès* ou *fonction Wifi,* la fonction de communication d'un tel équipement routeur. Ce point d'accès inclut un module radio bidirectionnel pour émettre ou recevoir les signaux sur la liaison physique, à savoir la liaison radio schématisée par les ondes radio 2 de l'antenne.

Le terminal 3 est par exemple un ordinateur portable. Par la suite, on entend par terminal tout dispositif apte à se connecter au routeur en Wifi, tel un ordinateur portable ou un dispositif du type PDA (pour « Personnal Digital Assistant ») ou plus généralement tout équipement apte à communiquer en Wifi et à implémenter un module de réveil selon l'invention. Le terminal 4 est par exemple un ordinateur ou un PDA, ou une imprimante, etc, ou plus généralement tout équipement apte à se connecter au routeur en mode Wifi.

Selon l'état de l'art, pour accéder au routeur à partir du terminal 3, un utilisateur saisit dans le terminal les paramètres d'identification du réseau Wifi. En particulier, il saisit ou sélectionne le nom du réseau domestique, connu de l'homme du métier sous l'abréviation SSID (pour « Service Set Identifier »), qui prend souvent la forme d'une chaîne alphanumérique (par exemple : « Livebox_666 ») et, de manière optionnelle, une clé d'accès au réseau domestique, telle qu'une clé d'accès WEP (pour « Wired Equivalent Privacy ») ou WPA (pour « WiFi Protected Access ») dont la fonction et la structure sont bien connues de l'homme du métier.

Le point d'accès est généralement activé par défaut dans la passerelle domestique qui consomme de ce fait beaucoup d'énergie. Le point d'accès émet notamment en permanence son identifiant SSID pour prévenir les terminaux de sa présence. Pour économiser de l'énergie, une solution évidente est d'éteindre la passerelle domestique lorsqu'elle n'est pas utilisée. Cela présente l'inconvénient de devoir la rallumer manuellement, ou par une commande filaire (Ethernet). L'utilisateur peut aussi programmer des plages pendant lesquelles son équipement routeur est éteint ou en veille profonde. Mais dans ce mode, les autres fonctions de l'équipement, par exemple la gestion de certaines communications téléphoniques, ou la visualisation de la télévision par internet, ne peut plus être assurée. Pour pouvoir de nouveau accéder au réseau domestique via le point d'accès, l'utilisateur doit attendre la fin de la plage horaire ou rallumer manuellement l'équipement routeur, ce qui est contraignant. Alternativement, il peut aussi éteindre uniquement le point d'accès (il existe un interrupteur spécifique sur la Livebox). Mais dans ce cas, aucun appareil ne pourra plus se connecter au réseau sans fil tant que le point d'accès ne sera pas réactivé.

En d'autres termes, selon l'état de l'art, un équipement tel que décrit ci-dessus peut avoir son point d'accès en état actif (communications WIFI bidirectionnelles consommant de ce fait de l'énergie en permanence), éteinte, ou en veille (absence de communication WIFI en émission et en réception).

Selon l'invention, le point d'accès dispose au contraire d'un mode supplémentaire, dit de « veille active » piloté par un module spécifique de gestion de la veille active, dit « Module de Veille Active » (MVA). Dans ce mode intermédiaire, la liaison radio est active seulement en réception et inhibée en émission, c'est-à-dire que l'émission des données est rendue impossible. On économise de ce fait de l'énergie puisqu'il n'y a plus d'émission de données. Le point d'accès est uniquement capable d'écouter sur la liaison radio, et de déterminer s'il a bien reçu l'identifiant de réveil qui lui permettrait de sortir du mode de veille active. L'identifiant de réveil est par exemple un SSID spécifique, que l'on appelle par la suite WUP-SSID, diffusé dans notre exemple par le terminal 3. Lorsque le routeur reçoit cet identifiant de réveil WUP-SSID, il sort de la veille active, réveille sa fonction WIFI en émission et les communications peuvent reprendre normalement via le réseau sans fil.

On peut de plus limiter la portée en réception de la liaison radio lorsqu'on est en état de veille active. On pourra prévoir par exemple que l'équipement routeur reçoive, lors de sa configuration, un paramètre relatif à la puissance souhaitée en réception, par exemple un pourcentage de réduction de la puissance de réception sur le canal radio par rapport à une puissance maximale.

On peut écouter uniquement sur un canal dédié, c'est à dire sur une certaine fréquence. En effet, selon l'état de la technique, l'équipement routeur scanne en permanence toutes les fréquences (ou canaux Wifi) disponibles. Cette écoute sur plusieurs canaux est coûteuse notamment en temps de calcul. Il est donc intéressant de transmettre, par exemple en paramètre d'une commande de paramétrage de la Livebox, le numéro de canal ou fréquence sur lequel sera reçu l'identifiant de réveil.

On peut imaginer d'inhiber la réception pendant certaines périodes et de l'activer pendant d'autres, par exemple sur une base de cycle alternant les états actifs et inactifs de la réception.

Selon l'invention, le point d'accès dispose également d'un mode dit de « réveil passif » qui lui permet soit de retourner dans l'état de veille active, soit de se réveiller effectivement si une demande de communication lui est adressée.

Selon une variante, on peut imaginer que d'autres appareils ou périphériques, connectés à l'équipement routeur, comme il sera présenté à l'appui de la figure 2, sont en veille profonde et ne seront réveillés que lorsque l'équipement routeur lui-même sort de la veille active. Si les équipements sont de surcroît connectés en mode Wifi, on peut imaginer un mode de réveil en cascade utilisant le même procédé, successivement, entre les équipements connectés : le terminal 3 réveille l'équipement 1 qui réveille le décodeur TV qui réveille le disque dur... par transmission de l'identifiant de réveil, WUP-SSID, de proche en proche. Si les équipements sont connectés en Ethernet, on peut imaginer d'utiliser un protocole de réveil de type Wake on Lan (WoL) : WOL est un standard des réseaux Ethernet qui permet à un terminal éteint d'être démarré à distance.

Le but de cette variante, non limitative, est d'améliorer l'efficacité de l'invention en réduisant encore la consommation électrique du point d'accès par un contrôle judicieux de sa fonction de communication sans fil.

La figure 2 est une représentation schématique des composants d'un équipement routeur, ou passerelle selon l'invention.

La passerelle domestique 1, telle que celle connue sous la dénomination commerciale « Livebox », comprend ici un modem ADSL, qui lui permet de communiquer sur le lien filaire (Ethernet) 5, un point d'accès WIF permettant de connecter des terminaux à la passerelle domestique par radio 2 via le protocole WIFI. Elle comporte par ailleurs, classiquement, des mémoires MEM articulées autour d'un processeur CPU. Les mémoires peuvent être de type ROM (de l'anglais *Read Only Memory*) ou RAM (de l'anglais Random Access Memory). Une partie de la mémoire MEM est reliée au point d'accès WIF et stocke, entre autres, les paramètres d'identification et d'association des équipements domestique au point d'accès WIF (table d'identifiants comprenant les identifiant uniques des terminaux domestiques qui ont déjà été autorisés à accéder au réseau domestique via le point d'accès, éléments de routage, etc, et selon l'invention table d'identifiants comprenant les identifiant uniques des terminaux autorisés à réveiller la passerelle). L'équipement routeur 1 comprend en outre un module MVA de mise en veille active du point d'accès WIF. Le module MVA peut être par exemple un programme logiciel s'exécutant dans la mémoire du routeur 1, ou un ensemble matériel et logiciel apte à contrôler le point d'entrée WIF pour le faire entrer et sortir de l'état de veille active au cours de laquelle les communications sont inhibées en émission.

L'équipement comporte en outre sur cet exemple un module d'interface USB (Bus Série Universel) pour relier des périphériques en mode série USB (par exemple un disque dur ou une imprimante, non représentés) et un serveur de stockage en réseau, également appelé stockage en réseau *NAS,* ou plus simplement *NAS* (de l'anglais *Network Attached Storage*), auquel est relié un disque physique ou virtuel DSK.

Il est bien entendu que si l'équipement n'est pas un routeur, il ne comporte pas de point d'accès en tant que tel et dans ce cas le module WIF est la fonction de communication Wifi de l'équipement.

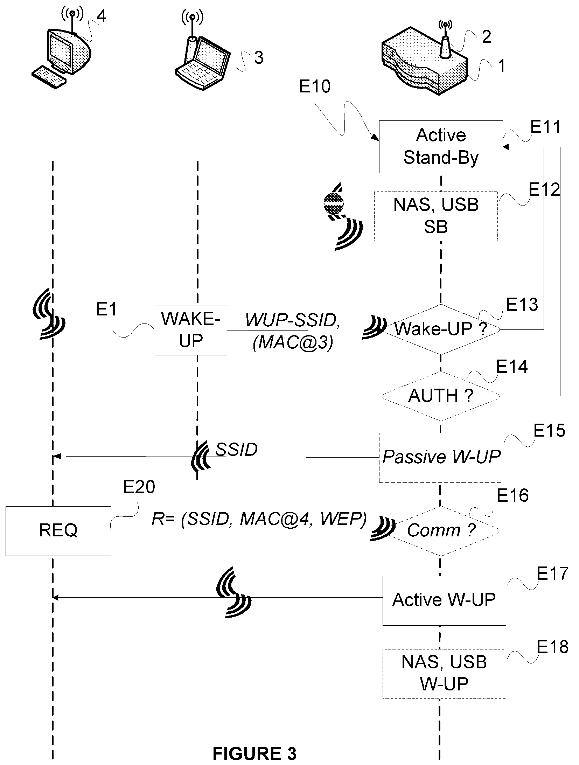

La figure 3 est un diagramme schématique des étapes du procédé de contrôle (mise en veille active et réveil) du point d'accès selon l'invention de l'équipement routeur (1) communiquant en Wifi sur une liaison radio (2) avec les deux périphériques (3,4) de la figure 1.

Au cours d'une étape E10, l'équipement routeur est positionné en veille active selon l'invention. Cette mise en veille active peut être déclenchée par un bouton, une commande reçue via un réseau sans fil ou filaire, etc. A l'issue de cette étape, l'équipement entre en veille active au cours de l'étape E11, c'est-à-dire que les communications du point d'accès sont inhibées en émission et autorisées en réception, comme symbolisé par la signalétique du sens interdit. Le point d'accès écoute mais n'émet plus. Selon l'invention, à l'appui de la figure 1, on peut envisager de surcroît de limiter cette écoute à un canal spécifique, de l'autoriser seulement de manière intermittente ou cyclique, ou encore de limiter la puissance de cette réception.

Selon une variante, on peut envisager à l'issue de cette étape E11 de déclencher la mise en veille des équipements périphériques connectés à l'équipement, par exemple le NAS et le concentrateur USB, au cours d'une étape E12 facultative.

Lors d'une étape E1, le terminal 3 chargé de réveiller l'équipement routeur, émet un signal de réveil sous la forme d'un identifiant. Dans cet exemple, il s'agit d'un identifiant de type SSID, distinct du SSID du point d'accès, dit « de réveil » (WUP-SSID). De manière facultative, l'adresse MAC (« Media Access Control ») correspondant à l'adresse de l'interface réseau du terminal 3 (MAC@3) est également émise sur la liaison radio.

Lorsque le point d'accès détecte une information sur le canal radio, il la lit et la compare (E13) à une valeur de réveil qu'il a préalablement mémorisée et qui correspond à la valeur de sortie de la veille active. Si l'équipement a détecté un tel identifiant de réveil, le module MVA (de mise en veille active) selon l'invention réveille le point d'accès en émission, c'est-à-dire que la communication bidirectionnelle devient de nouveau possible. Le point d'accès recommence classiquement à émettre des informations sur le lien Wifi à destination de terminaux potentiellement à sa recherche (notamment, son SSID, voir l'étape E15).

Selon un exemple utile pour la compréhension de l'invention, représentée à l'étape E14, l'équipement vérifie l'identité du terminal 3, afin d'être sûr qu'il est autorisé à le réveiller. Par exemple, l'équipement a enregistré au préalable les adresses physiques uniques des terminaux autorisés à le réveiller, c'est-à-dire le terminal 3 dans l'exemple. Dans le cas où il reconnait le terminal qui se connecte, le point d'accès WIF sort de son étape de réveil passif, sinon s'il s'agit par exemple de l'adresse du terminal 4 qui n'est pas autorisé, il retourne à l'étape E11 de veille active. Selon l'invention représentée aux étapes E15 et E16, le point d'accès n'est pas encore complètement réveillé. En d'autres termes, durant l'étape E15 qui suit l'étape E13 de réveil, il se trouve placé (par le module MVA) dans une sorte d'état intermédiaire que l'on qualifiera de réveil passif (*Passive Wake-Up,* E15), qui peut précéder une phase de réveil effectif ou un retour à la veille active en E11. Lors de l'étape E16, en effet, de réveil effectif, le point d'accès surveille classiquement si un terminal cherche à s'identifier afin de rentrer en communication avec lui. Dans cet exemple, l'identifiant (unique) d'un terminal est l'adresse physique MAC (pour « Media Access Control ») correspondant à l'adresse de son interface réseau. Selon l'état de l'art, lorsqu'un terminal se connecte au réseau domestique via le point d'accès WIF, ledit terminal émet une requête en connexion (étape E20) qui comprend cette adresse physique MAC (MAC@4), l'identifiant du réseau domestique (SSID) et éventuellement une clé d'accès au réseau (WEP). Le point d'accès WIF a enregistré les adresses physiques uniques MAC des terminaux pour lesquels il a autorisé un accès, c'est-à-dire les terminaux domestiques 3 et 4 dans l'exemple. Dans le cas où il reconnait le terminal qui se connecte, 4 sur l'exemple, le point d'accès WIF sort de son étape de réveil passif pour basculer dans un état de réveil (actif) au cours de l'étape E17. Dans le cas contraire, si aucun terminal (ou aucun terminal autorisé) ne cherche à établir la communication avec l'équipement routeur, le point d'accès quitte son état de réveil passif pour se rendormir en position de veille active par un retour du procédé à l'étape E11. Dans un exemple utile à la compréhension de l'invention, l'étape E16 est suivie directement de l'étape E17 de réveil actif.

Selon une variante schématisée à l'étape E18, le réveil actif de l'équipement est suivi du réveil des périphériques qui se trouvaient endormis selon notre exemple, à savoir l'interface USB et le NAS pour le stockage en réseau.

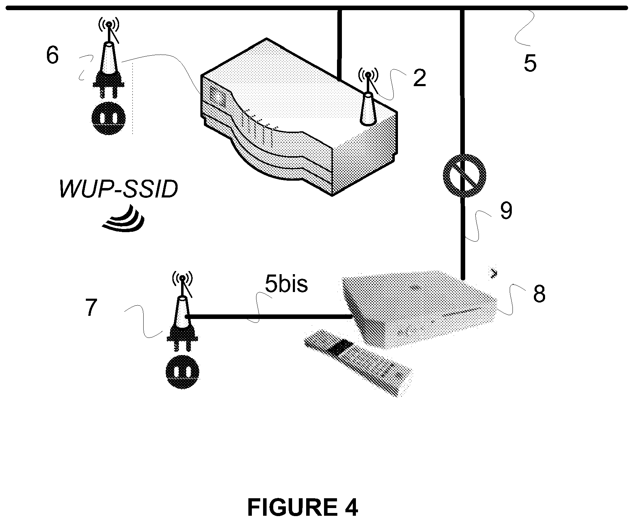

La figure 4 représente un second mode de réalisation ne faisant pas partie de l'invention. Cette fois la passerelle domestique 1 est reliée à un émetteur Wifi 6 (en anglais *Wifi Plug*) qui communique avec un autre plug Wifi 7 relié à un décodeur vidéo 8 (en anglais : STB pour Set-Top-Box). Il est fréquent de rencontrer ce type de configuration lorsque la passerelle domestique ne se trouve pas auprès de la STB. Contrairement au mode de réalisation proposé à la figure 1, la communication qui nous intéresse ici est donc celle qui s'établit en Wifi entre les deux prises 6 et 7. Il ne s'agit plus d'une communication à l'intérieur d'un réseau piloté par un routeur équipé d'un point d'accès (mode dit : « infrastructure de réseau »), mais plus simplement d'une communication de point à point (mode dit : « adhoc ») entre deux équipements pourvus d'une fonction Wifi. On suppose que la STB est en veille, ce qui représente un gain de consommation important. Pour la réveiller à partir de la passerelle domestique (par exemple parce qu'un utilisateur souhaite regarder la TV) il n'existe aujourd'hui pas de solution simple : soit les *plugs* sont actifs, ce qui est généralement le cas, et dans ce cas ils communiquent constamment sur le canal Wifi ; soit les *plugs* sont inactifs (par exemple débranchés) et dans ce cas il est bien entendu impossible de réveiller la STB à travers la liaison WiFI. Il est possible, selon l'état de l'art, d'utiliser une liaison filaire 9 (Ethernet), ce qui peut être compliqué à mettre en œuvre selon la topologie du réseau domestique. L'invention permet de s'affranchir du fil 9 de la manière suivante : le *plug* 7 de la STB est positionné en veille active, comme expliqué auparavant à l'appui de la figure 2. Le plug 6, pour le sortir de ce mode, émet un signal de réveil (WUP_SSID) sur la liaison radio. Lorsque le plug 7 reconnaît cet identifiant de réveil, il sort de son état de veille active pour entrer soit dans un état de réveil passif, comme décrit auparavant, en attente d'une confirmation de communication, soit directement dans un état de réveil (actif) qui lui permettra de réveiller la STB si elle était en veille.

En effet, la liaison filaire Ethernet 5bis entre le plug 7 et la STB 8 consomme également de l'énergie. On peut envisager, selon l'invention, de réduire cette consommation en désactivant cette connexion lorsque le plug est en état de veille active et le réveiller ultérieurement (par exemple, par un signal de Wake On Lan, WOL, comme discuté plus haut).

Le terminal 3 selon l'invention est simplement équipé d'un module logiciel ou matériel de génération du message comportant l'identifiant de réveil, WUP-SSID, par exemple une application logicielle installée sur le terminal et lancée par une action externe : lecture d'une étiquette en champ proche (NFC), position géographique, action de l'utilisateur...

Il va de soi que les modes de réalisation décrits ci-dessus ont été donnés à titre purement indicatif et nullement limitatif, et que de nombreuses modifications peuvent être facilement apportées par l'homme de l'art sans pour autant sortir du cadre de l'invention dont la portée est définie par les revendications.

## Revendications

1. Procédé de contrôle d'une passerelle de réseau local (1) pourvue d'une fonction de pilotage d'une liaison radio (2) bidirectionnelle en réception et en émission, la passerelle (1) étant destinée à se connecter à au moins un terminal (3,4) du réseau local via ladite liaison (2), procédé **caractérisé en ce qu'**il comprend les étapes suivantes sur la passerelle :
- enregistrement d'un identifiant unique d'au moins un terminal du réseau local autorisé à réveiller la passerelle et d'un identifiant de réveil;
- entrée de la passerelle dans un état de veille active dans lequel :
- la liaison radio (2) est inhibée en émission ;
- la liaison radio (2) est limitée en portée ou limitée à un canal spécifique ou inhibée périodiquement en réception ;
- écoute de la liaison radio en réception (E11) ;
- sur détection d'un identifiant de réveil sur la liaison radio (E13), entrée de la passerelle dans un état de réveil passif dans lequel la liaison radio (2) est activée en émission ;
- réception d'une requête (E20, R) de communication ;
- contrôle de la validité du terminal (4) émetteur de la requête, par comparaison de son identifiant unique à l'identifiant unique enregistré pour au moins un terminal du réseau local autorisé à réveiller la passerelle ;
- positionnement de la passerelle :
- dans un état de réveil dans lequel la liaison radio (2) est active en émission et en réception, si ledit terminal est valide ;
- dans un état de veille active sinon.

2. Procédé de contrôle d'un équipement selon la revendication 1, **caractérisé en ce que** l'équipement comporte en outre des modules fonctionnels qui sont activés (E18) suite à une étape d'activation de ladite liaison radio en émission (E15, E17).

3. Dispositif de contrôle d'une passerelle de réseau local (1) pourvu d'un moyen de contrôle d'une liaison radio (2) bidirectionnelle en réception et en émission, la passerelle (1) étant destinée à connecter au moins un terminal (3,4) du réseau local via ladite liaison (2), **caractérisé en ce qu'**il comprend :
- Des moyens pour enregistrer un identifiant unique d'au moins un terminal du réseau local autorisé à réveiller la passerelle et un identifiant de réveil;
- Des moyens pour faire entrer la passerelle dans un état de veille active dans lequel :
- la liaison radio (2) est inhibée en émission ;
- la liaison radio (2) est limitée en portée ou limitée à un canal spécifique ou inhibée périodiquement en réception ;
- Des moyens d'écoute de la liaison radio en réception (E11) ;
- Des moyens pour, sur détection d'un identifiant de réveil sur la liaison radio, faire entrer la passerelle dans un état de réveil passif dans lequel la liaison radio (2) est activée en émission ;
- Des moyens pour recevoir une requête (E20, R) de communication ;
- Des moyens de contrôle de la validité du terminal (4) émetteur de la requête, par comparaison de son identifiant unique à l'identifiant unique enregistré pour au moins un terminal du réseau local autorisé à réveiller la passerelle ;
- Des moyens pour positionner la passerelle :
- dans un état de réveil dans lequel la liaison radio (2) est active en émission et en réception, si ledit terminal est valide ;
- dans un état de veille active sinon.

4. Passerelle de réseau local (1) comportant un dispositif de contrôle selon la revendication 3.

5. Programme d'ordinateur apte à être mis en œuvre sur une passerelle de réseau local équipée d'une fonction (2) telle que définie dans la revendication 1, le programme comprenant des instructions de code qui, lorsque le programme est exécuté par un processeur de ladite passerelle, permet à la passerelle d'effectuer les étapes du procédé (E10-E18) selon la revendication 1.

## Patentansprüche

1. Verfahren zur Steuerung eines Gateways eines lokalen Netzwerks (1), der mit einer Funktion zur empfangsseitigen und sendeseitigen Steuerung einer bidirektionalen Funkverbindung (2) versehen ist, wobei der Gateway (1) dazu bestimmt ist, sich über die Verbindung (2) mit mindestens einem Endgerät (3, 4) des lokalen Netzwerks zu verbinden, wobei das Verfahren **dadurch gekennzeichnet ist, dass** es die folgenden Schritte am Gateway umfasst:
- Speichern einer eindeutigen Kennung mindestens eines Endgeräts des lokalen Netzwerks, das den Gateway aufwecken darf, und einer Aufweckkennung;
- Eintreten des Gateways in einen aktiven Bereitschaftszustand, in welchem:
- die Funkverbindung (2) sendeseitig gehemmt ist;
- die Funkverbindung (2) reichweitenbeschränkt oder auf einen bestimmten Kanal begrenzt oder periodisch empfangsseitig gehemmt ist;
- empfangsseitiges Horchen der Funkverbindung (E11);
- bei Detektion einer Aufweckkennung auf der Funkverbindung (E13), Eintreten des Gateways in einen passiven Aufwachzustand, in welchem die Funkverbindung (2) sendeseitig aktiviert ist;
- Empfangen einer Kommunikationsanforderung (E20, R);
- Kontrollieren der Gültigkeit des Endgeräts (4), das die Anforderung sendet, durch Vergleich seiner eindeutigen Kennung mit der gespeicherten eindeutigen Kennung für mindestens ein Endgerät des lokalen Netzwerks, das den Gateway aufwecken darf;
- Versetzen des Gateways:
- in einen Aufwachzustand, in welchem die Funkverbindung (2) sende- und empfangsseitig aktiv ist, wenn das Endgerät gültig ist;
- in einen aktiven Bereitschaftszustand anderenfalls.

2. Verfahren zur Steuerung eines Geräts nach Anspruch 1, **dadurch gekennzeichnet, dass** das Gerät ferner Funktionsmodule aufweist, die nach einem Schritt des sendeseitigen Aktivierens der Funkverbindung (E15, E17) aktiviert (E18) werden.

3. Vorrichtung zur Steuerung eines Gateways eines lokalen Netzwerks (1), der mit einem Mittel zur empfangs- und sendeseitigen Steuerung einer bidirektionalen Funkverbindung (2) versehen ist, wobei der Gateway (1) dazu bestimmt ist, über die Verbindung (2) mindestens ein Endgerät (3, 4) des lokalen Netzwerks zu verbinden, **dadurch gekennzeichnet, dass** sie Folgendes umfasst:
- Mittel zum Speichern einer eindeutigen Kennung mindestens eines Endgeräts des lokalen Netzwerks, das den Gateway aufwecken darf, und einer Aufweckkennung;
- Mittel zum Eintretenlassen des Gateways in einen aktiven Bereitschaftszustand, in welchem:
- die Funkverbindung (2) sendeseitig gehemmt ist;
- die Funkverbindung (2) reichweitenbeschränkt oder auf einen bestimmten Kanal begrenzt oder periodisch empfangsseitig gehemmt ist;
- Mittel zum empfangsseitigen Horchen (E11) der Funkverbindung;
- Mittel zum Eintretenlassen des Gateways in einen passiven Aufwachzustand, in welchem die Funkverbindung (2) sendeseitig aktiviert ist, bei Detektion einer Aufweckkennung auf der Funkverbindung;
- Mittel zum Empfang einer Kommunikationsanforderung (E20, R);
- Mittel zum Kontrollieren der Gültigkeit des Endgeräts (4), das die Anforderung sendet, durch Vergleich seiner eindeutigen Kennung mit der gespeicherten eindeutigen Kennung für mindestens ein Endgerät des lokalen Netzwerks, das den Gateway aufwecken darf;
- Mittel zum Versetzen des Gateways:
- in einen Aufwachzustand, in welchem die Funkverbindung (2) sende- und empfangsseitig aktiv ist, wenn das Endgerät gültig ist;
- in einen aktiven Bereitschaftszustand anderenfalls.

4. Gateway eines lokalen Netzwerks (1) aufweisend eine Steuerungsvorrichtung nach Anspruch 3.

5. Computerprogramm, das geeignet ist, auf einem Gateway eines lokalen Netzwerks implementiert zu werden, der mit einer Funktion (2) nach Anspruch 1 versehen ist, wobei das Computerprogramm Code-Anweisungen umfasst, die, wenn das Programm von einem Prozessor des Gateways ausgeführt wird, es dem Gateway erlauben, die Schritte des Verfahrens (E10 - E18) nach Anspruch 1 durchzuführen.

## Claims

1. Method for controlling a local area network gateway (1) provided with a function of driving a bidirectional radio link (2) for reception and transmission, the gateway (1) being intended to be connected to at least one terminal (3, 4) of the local area network via said link (2), which method is **characterized in that** it comprises the following steps on the gateway:
- saving of a unique identifier of at least one terminal of the local area network that is authorized to wake up the gateway and of a wake-up identifier;
- the gateway entering an active standby state in which:
- the radio link (2) is inhibited for transmission;
- the radio link (2) is limited in range or limited to a specific channel or periodically inhibited for reception;
- listening on the radio link for reception (Ell);
- upon detection of a wake-up identifier on the radio link (E13), the gateway entering a passive standby state in which the radio link (2) is activated for transmission;
- reception of a communication request (E20, R);
- checking of the validity of the terminal (4) transmitting the request, by comparing its unique identifier with the unique identifier saved for at least one terminal of the local area network that is authorized to wake up the gateway;
- placing the gateway:
- in a standby state in which the radio link (2) is active for transmission and for reception, if said terminal is valid;
- in an active standby state if not.

2. Method for controlling an equipment according to Claim 1, **characterized in that** the equipment further comprises functional modules which are activated (E18) following a step of activation of said radio link for transmission (E15, E17).

3. Device for controlling a local area network gateway (1) provided with a means for controlling a bidirectional radio link (2) for reception and transmission, the gateway (1) being intended to be connected to at least one terminal (3, 4) of the local area network via said link (2), **characterized in that** it comprises:
- means for saving a unique identifier of at least one terminal of the local area network that is authorized to wake up the gateway and a wake-up identifier;
- means for making the gateway enter an active standby state in which:
- the radio link (2) is inhibited for transmission;
- the radio link (2) is limited in range or limited to a specific channel or periodically inhibited for reception;
- means for listening on the radio link for reception (Ell);
- means for, upon detection of a wake-up identifier on the radio link, making the gateway enter a passive standby state in which the radio link (2) is activated for transmission;
- means for receiving a communication request (E20, R) ;
- means for checking of the validity of the terminal (4) transmitting the request, by comparing its unique identifier with the unique identifier saved for at least one terminal of the local area network that is authorized to wake up the gateway;
- means for placing the gateway:
- in a standby state in which the radio link (2) is active for transmission and for reception, if said terminal is valid;
- in an active standby state if not.

4. Local area network gateway (1) comprising a control device according to Claim 3.

5. Computer program capable of being implemented on a local area network gateway equipped with a function (2) such as defined in Claim 1, the program comprising code instructions which, when the program is executed by a processor of said gateway, allow the gateway to carry out the steps of the method (E10-E18) according to Claim 1.
